# EUROPEAN PATENT APPLICATION

(11) **EP 4 851 208 A2**
(43) Date of publication of application: **09.12.2026**
(21) Application number: 26205764.9
(22) Date of filing: 16.09.2025
(51) Int. Cl.: C08G 18/78

(54) **ULTRAVIOLET RESISTANT POLYURETHANE SEALANT**

(30) Priority: 16.09.2024 US 202463695121 P
(62) Document number(s) of the earlier application(s) in accordance with Art. 76 EPC: 25202478.1 / 4 763 880
(71) Applicant: The Patent Well LLC, Fort Worth, TX 76116 (US)
(72) Inventor: WIEGAND, Troy, Fort Worth, 76133 (US)
(74) Representative: Elsworth, Dominic Stephen

(57) **Abstract**

A two-part thermoset or thermoplastic, elastomeric sealant comprising the cured product of an isocynate side and a polyol side combined at a volume ratio of about 1:1 to 1:10. The isocyanate side comprises an aliphatic isocyanate prepolymer, a multifunctional aliphatic polyisocyanate crosslinker, a polyol, titanium dioxide pigment, and optionally a thickening and/or deaeration agent. The polyol side comprises a polyol, an aliphatic isocyanate prepolymer, one or more catalysts, hydrophobically coated zinc oxide, a phenolic antioxidant, and a UV stabilizer component comprising a hindered amine light stabilizer and/or a triazole UV absorber.

## Description

### CROSS-REFERENCE TO RELATED APPLICATION

This application claims the benefit of U.S. Provisional Patent Application No. 63/695,121 filed September 16, 2024, which is hereby incorporated.

### BACKGROUND OF THE INVENTION

### Field of the Invention

Sealants, more particularly, cure in place, polymer sealants for use on aircraft.

### Description of the Related Art

Sealants help prevent moisture ingress and protect surfaces, such as aircraft surfaces, from corrosion. Aircraft, especially the exterior of the aircraft, may be subject to harsh conditions that may cause, over time, degradation of a sealant exposed thereto. Degradation may be caused by exposure to light, including ultraviolet light (wavelength about 10nm to about 400nm), harsh chemicals or extreme environmental conditions such as temperature, moisture and pressure conditions, as well as mechanical erosion due to the motion of the aircraft through the atmosphere. Currently available sealants including some polysulfide and polyurethane based sealants often suffer from degradation of various physical and chemical properties under exposure to these conditions.

### SUMMARY OF THE INVENTION

This degradation may be especially evident when the sealant may carry a coloring pigment or other tinted ingredients, for example, titanium oxide to tint the sealant white. A white sealant with the right properties may be advantageous, for example, in that it may make fluid leakage, dirt and damage more visible on an aircraft surface. Moreover, in aircraft, including military aircraft, it may be advantageous for a sealant, including a white sealant to match, or closely match the color of another part, sometimes an adjacent part painted white.

Applicants provide a sealant, in at least one embodiment, tinted, in some tinted embodiments tinted white, comprising a two part polyurethane with a unique chemistry and set of properties, the sealant resisting deterioration upon exposure to the elements, including visible and ultraviolet (UV) light. Applicants further provide a device, including an injector assembly or applicator for injecting onto a surface or other workpiece; two components of the polyurethane following mixing. Applicants further provide a manner of using a white polyurethane as a sealing member including a linear sealing member, in some embodiments for use between adjacent parts of an aircraft. Applicants further provide a manner of making the polymer sealant, including the white sealant and the components thereof.

According to a first aspect of the invention there is provided a two part, thermoset or thermoplastic, elastomeric UV resistant sealant comprising the cured product of:
an isocyanate side of viscosity about 12,500 - 500,000 cP at 25oC and a polyol side of viscosity about 12,500 - 500,000 cP at 25 deg. C, combined at a volume ratio between about 1:1 and 1:10; and,
wherein the isocyanate side comprises:
   A1. An isocyanate prepolymer terminated with an aliphatic isocyanate, including, but not limited to hexamethylene diisocyanate (HDI), with density between about 0.85 - 1.35 (g/ml), liquid at room temp, and a percent isocyanate content between about 2 - 14%.
   A2. A multifunctional crosslinker, which may be a solvent free, aliphatic polyisocyanate, with a density between 0.85 - 1.35 (g/ml), and a percent isocyanate content between 10 - 30%.
   A3. A polyol comprising, a solvent free (99% or greater solids) liquid polyol selected from the group comprising: polyether, polyester, or polycarbonate diol, the polyol with a density of about 0.90 - 1.30 (g/ml) and an OH value of 37 - 224 (KOH mg/PCDg) and between 4 and 20% mass of the total isocyanate side.
   A4. A pigment, in some embodiments titanium dioxide having a density between about 4.0 - 6.0 (g/ml) at a minimum of 2% by mass to 10% of the total isocyanate side.
   A5. A thickening agent between 0.0% - 10% by mass.
   A6. A deaeration or defoaming agent with density about 0.80 - 1.10 (g/ml) in a range of 0.0% to 5% by mass;
   wherein the polyol side comprises:
      B1. A second polyol, the second polyol comprising a solvent free (99% or greater solids) liquid polyol selected from the group comprising: polyether, polyester, or polycarbonate diol, the second polyol with a density of about 0.90 - 1.30 (g/ml), OH value of 37 - 224 (KOH mg/PCDg), and between 30 - 50% by mass;
      B2. A second isocyanate, the second isocyanate comprising a prepolymer terminated with an aliphatic isocyanate, namely, a hexamethylene diisocyanate (HDI), with density between 0.85 - 1.35 (g/ml), liquid at room temp, and a percent isocyanate content between 2 - 14%, between 1 - 8% by mass;
         at least one of B3 and/or B4 below,
      B3. A first catalyst, the first catalyst selected from the group comprising Bi, Sn, Zn, Pb, Hg the first catalyst, with an active metal content of 6 - 20% by mass and a color of 5 maximum on the Gardner scale, the first catalyst between 0.1 - 2% by mass;
      B4. A second catalyst, the second catalyst selected from the group comprising a Bi, Sn, Zn, Pb, Hg the second catalyst, with an active metal content of 9 - 22% and a color of 5 maximum on the Gardner scale, the second catalyst between 0.1 - 2% by mass;
      B5. A ZnO powder with a hydrophobic coating, a density between about 5.0 - 6.0 (g/ml), a particle size between about 5 - 50 nanometers, and which absorbs electromagnetic radiation with a wavelength from about 200 - 400 nanometers, and has a critical wavelength about 360 - 390 nanometers, at no less than 0.5% but up to 8% by mass;
      B6. A thermal stabilizing liquid antioxidant, namely a phenolic antioxidant, and a maximum color of 14 on the Gardner scale, at no less than 0.20% but up to 3% by mass;
         a UV stabilizer component, comprising at least one of B7 and/or B8;
      B7. A first UV stabilizer, comprising a liquid hindered amine light stabilizer, with a maximum color of 14 on the Gardner scale, at no less than 0.20% by mass but up to 3% by mass;
      B8. A second UV stabilizer, comprising a UV absorber including a triazole including a benzotriazole, said second UV stabilizer miscible with said first UV stabilizer, with a maximum color of 14 on the Gardner scale, at no less than 0.10% by mass but up to 3% by mass;
         wherein B5 thru B8 totals more than 5% by mass;
      B9. A second thickening agent between 0.0 - 10% by mass; and
      B10.A second deaeration or defoaming agent with density 0.80 - 1.10 (g/ml) at a maximum of 5% by mass.

According to a further aspect of the invention there is provided a sealant for use on an aircraft or other vehicle, the sealant comprising: a polyol and an isocyanate, when cured, yielding a UV resistant (SAE J2725), elastomeric polyurethane.

The polyurethane may be tinted.

The polyurethane may be white.

The polyurethane may have a UV light stabilizer.

The polyurethane may have a final hardness between 30 Shore A and 95 Shore A (ASTM D2240 Rex Gauge Durometer). All tests set forth herein, unless otherwise noted, 75 deg, 50% RH.

The polyurethane may be hydrolytically stable (ASTM D3137, 100C for 1 week, no more than a 25% change in tensile strength, 24 hours after exposure and before testing, 50% humidity).

The polyurethane may have a glass transition temperature between -55 degrees and 5 degrees C.

The polyurethane may be paintable (ASTM D3359).

The polyurethane may comprise a resin and hardener that will react at such a rate to have the storage modulus, E', equivalent to the loss modulus, E", in a minimum of 5 minutes and a maximum of 2 hrs when tested on a rheometer (ASTM D6204).

The polyurethane may have a peel strength of 10 and 60 pounds inch width (piw), 90 degrees peel back on clean Al 2024, or a cohesive failure of the adhesive during testing, 250 mil thick specimen, fully cured, 50x50 stainless steel mesh, 1" wide, 6" long (ASTM D6862).

The polyurethane may have a minimum tensile strength of 800 psi as measured by ASTM D412, Method A, extension rate 20" per minute, specimen Die C.

The polyurethane may have a minimum elongation of 200% as measured by ASTM D412.

The flow of the polyurethane may be non-linearly, inversely responsive to shear applied.

The polyurethane may be a thermoset, viscoelastic, sag resistant, polyurethane.

The sealant member may be a linear member proximate or contacting two different parts on an aircraft exterior.

The sealant may have a maximum slump of 7.0 as measured by ASTM D2202.

The sealant may have a maximum shrink of 1% as measured by ASTM C1241.

According to a further aspect of the invention there is provided a method of making a linear sealing member for use on parts of an aircraft, the linear sealing member at least partially exposed to sunlight, the method comprising the steps of:
providing an injector having a forcing element, a first compartment with a polyol side and a second compartment with an isocyanate side, the polyol and isocyanate prepared to yield a cured, UV resistant polyurethane, the mixing compartments in fluid communication with a tip;
placing the tip of the injector proximate an aircraft part;
applying sufficient pressure to the forcing element such that the mixed polyol and isocyanate flows from the tip and contacts aircraft part; and,
allowing the mix to cure.

The aircraft part may be a polycarbonate or acrylic windscreen.

The aircraft part may be an exterior aluminum alloy part.

The exterior aluminum alloy part may be painted.

The cured polyurethane may be white or tinted.

According to a further aspect of the invention there is provided an injector assembly comprising:
a forcing element, a first compartment, having a first fluid composition and a second compartment having a second fluid composition, and a mixing straw with a tip, the mixing straw in fluid communication with the two compartments, the forcing element adapted to receive and apply pressure to the two compartments such that the fluids mix in the mixing straw and are expelled from the tip, wherein the mix cures to a white, UV resistant, thermoset polyurethane elastomer.

According to a fourth aspect of the invention there is provided an aircraft sealant comprising: a cured, UV resistant polymer. The cured polymer may be white or tinted.

The sealant may have a minimum elongation of 200% as measured by ASTM D412.

The sealant may have a final hardness of between 30 and 95 Shore A (ASTM D2240).

The sealant may have a peel strength of 10 and 60 pounds inch width (piw), 90 degrees peel back on clean Al 2024, or a cohesive failure of the adhesive during testing (ASTM D6862).

After 500 hours of exposure, SAE J2527 (2017), the CIELab color space may have a Delta E of 3 or less.

After 1000 hours of exposure, SAE J2527 (2017), the CIELab color space may have a Delta E of 5 or less.

After 500 hours of exposure, SAE J2527 (2017), the CIELab color space may have undergone a change of 3 or less.

After 1000 hours of exposure, SAE J2527 (2017), the CIELab color space may have undergone a change of 4 or less.

The above as well as additional objectives, features, and advantages in the various embodiments of the present invention will become apparent in the following detailed written description. These features described above may be provided independently or in any technically compatible combination.

### BRIEF DESCRIPTION OF THE DRAWINGS

The present invention may be better understood, and its numerous objects, features, and advantages of its various embodiments made apparent to those skilled in the art by referencing the accompanying drawings.
Figure 1 illustrates an elevational view of a cartridge for containing the components of Applicant's white sealant in accordance with one implementation of the present invention;
Figure 2 illustrates the cartridge attached to a forcing assembly, the combination providing an applicator for mixing and applying the mix to a workpiece in accordance with one implementation of the present invention;
Figures 3 and 3A illustrate the applicator applying the uncured sealant mix to aircraft parts in accordance with one implementation of the present invention;
Figure 4 shows the cured white sealant filing a gap or bridging a space between several parts of an aircraft in accordance with one implementation of the present invention.

The use of the same reference symbols in different drawings indicates similar or identical items.

### DESCRIPTION OF THE PREFERRED EMBODIMENT(S)

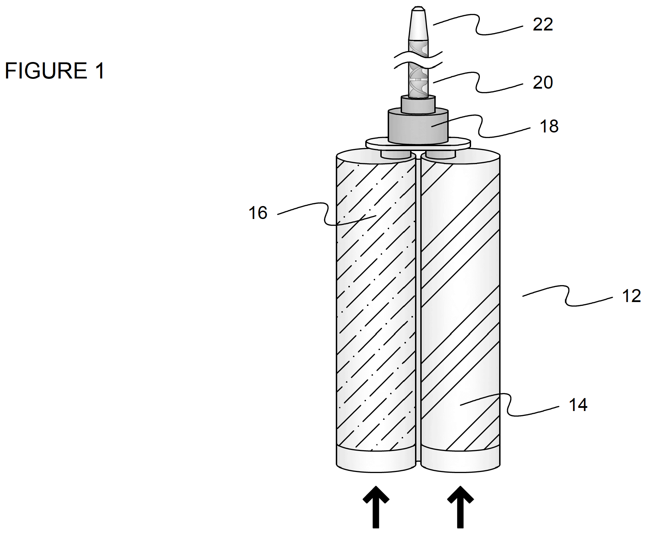

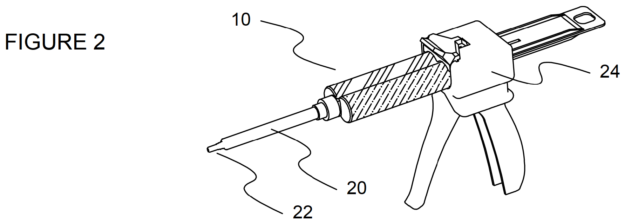

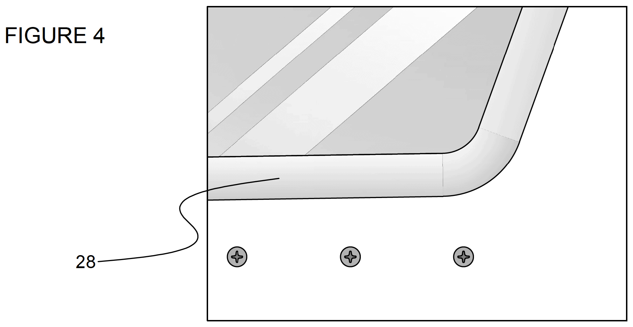

Figures 1 through 4 illustrate an injector assembly or applicator 10 (see Fig. 2) including a cartridge 12 having a first compartment 14 and a second compartment 16. The two compartments 14/16 are typically the same volume, in some embodiments 100 cc each (in other embodiments 25 cc each), adapted to receive a first component and a second component of a mix which will cure into a cured sealant. The two components are forced into a mixing straw 20, which removable attaches to the cartridge 12 at connection member 18 placing the mixing straw in fluid communication with the first compartment and the second compartment. At the removed end of the mixing straw is tip 22. When a forcing assembly 24, which may be manually operated, see Fig. 2, acts on the two compartments, the contents are pushed into and through the mixing straw 26 and emitted as a viscous mix 26 directly on the workpiece, and which, upon curing, will form a polyurethane sealant 28, see figure 4. The mixing straw may have multiple transverse members which force the two components together. Thus, applicants provide an applicator to apply a two-part, cure in place polyurethane sealant, which may be shaped by hand or with a shaping tool (during working life) before it cures. The working life cure time in slow cure embodiments is about 40-50 min (fast cure embodiments 12-18 minutes). The full cure time (90% final hardness) in slow cure embodiments is between 12 and 24 hours (fast cure embodiments 5-7 hours), all cure times at 72-75 degrees F, 50% RH.

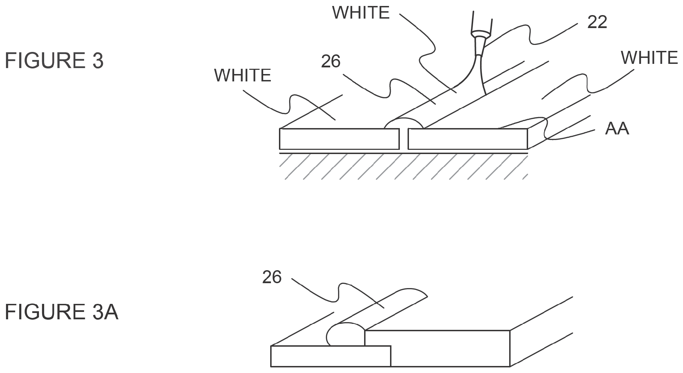

The cured polyurethane sealant 28 has a variety of uses including in or on aircraft, such as where adjacent aircraft parts require a sealant such as a sealant to prevent moisture from passing thereinto and to inhibit corrosion. An aircraft assembly AA may include different aircraft parts adjacent to one another or a single aircraft part requiring a sealant. In Fig. 4 the polyurethane sealant is used on an AA, between an aircraft windshield frame and an aircraft windshield such as an acrylic or polycarbonate windshield. The user will place the tip of the applicator 10 adjacent to a gap in the parts and/on the surface or boundary to be sealed, apply pressure to the forcing assembly 24 and move the tip according to the desired direction and thickness of sealant required, see Fig. 3 (gap filler) and 3A (fillet seal). If the mix in the mixing straw gets too thick from curing, a new mixing straw may be used, by removing the straw from connection member 18 and attaching a new one.

Applicant's sealant has a number of properties (alone or in combination) unique to polymer sealants and polyurethane sealants. In a preferred embodiment it is tinted with a pigment to provide a color, in one embodiment a titanium oxide pigment to provide for a white sealant. Applicants cured polymer may be a thermoset, UV resistant (in some embodiments with no or minimal color change after exposure per SAE J2725), elastomeric, and in some embodiments it is viscoelastic, sag resistant, with a minimum elongation of 200% as measured by ASTM D412. The minimum tensile strength may be 800 psi (maximum in some embodiments is 6000 psi), ASTM D412. In flow, the polyurethane is non-linearly responsive to applied shear forces (thixotropic). It may provide, when cured, an adhesive bond to painted or bare aluminum, acrylic or polycarbonate transparents, and in some embodiments the adhesive bond (adhesion) is stronger than the tensile strength (cohesion). In some embodiments the peel strength is 10 to 60 piw, 90 degrees peel back on clean aluminum alloy 2024, 77 degrees, 50% RH. When the polyurethane mix cures it will, in some embodiments, have a maximum shrink of 1% as measured by ASTM C 1241. The maximum slump in some embodiments is 9.0 as measured by ASTM D2202. It may have a hardness of 20 Shore A to 95 Shore A (measured 24 hours after cure, 25 deg C, 50% RH) as measured by ASTM D2240. The glass transition temperature of the cured polyurethane may be between -50 and 10 degrees C.

Observations of various tinted embodiments have demonstrated that it achieves resistance to UV light, maintains a white color (non-yellowing) in accelerated UV exposure tests, and maintains corrosion inhibiting properties following such exposure. As such, it is suitable for a number of uses both in marine, terrestrial and airborne vehicles. It is especially useful on aircraft, most especially on aircraft exteriors.

The chemicals and some of the properties used for some embodiments are set forth below, the Isocyanate being the first component and the Polyol being the second component.

### A: Isocyanate Side

| Purpose | Ingredient | Density (g/ml) | Mass (g) |
|---|---|---|---|
| 1. Isocyanate | LFH C840 | 1.10 | 179.2 |
| 2. Crosslinker | HB-100 | 1.120 | 9.0 |
| 3. Polyol | PH-100 | 1.133 | 24.6 |
| 4. Pigment | TS-6200 | 4.230 | 11.2 |
| 5. Silica | KT-30 | 2.200 | 4.5 |
| 6. Deaeration | BYK-1790 | 0.850 | 2.2 |

### B: Polyol Side

| Purpose | Ingredient | Density (g/ml) | Mass (g) |
|---|---|---|---|
| 1. Polyol | PH-100 | 1.133 | 182.6 |
| 2. Isocyanate | LFH C840 | 1.100 | 20.3 |
| 3. Bi Catalyst | Reaxis C716 | 1.100 | 2.0 |
| 4. Zn Catalyst | XK-614 | 1.140 | 0.4 |
| 5. ZnO Tenray | ZMP | 5.610 | 10.1 |
| 6. Phenolic AO | BNX 1135 | 0.970 | 3.0 |
| 7. HALS | BLS 292 | 0.992 | 3.0 |
| 8. UV Absorber | BLS 1130 | 1.170 | 1.5 |
| 9. Silica | KT-30 | 2.200 | 14.2 |
| 10. Deaeration | BYK-1790 | 0.850 | 2.0 |

The isocyanate side typically has a viscosity of about 12,500 - 500,000 cP at 25oC and the polyol side a viscosity about 12,500 - 500,000 cP at 25oC, with a combined volume ratio between about 1:1 and 1:10. The isocyanate side may include the following.

A1. An isocyanate prepolymer terminated with an aliphatic isocyanate, including, but not limited to hexamethylene diisocyanate (HDI), with density between about 0.85 - 1.35 (g/ml), liquid at room temp, and a percent isocyanate content between about 2 - 14%.

A2. A multifunctional crosslinker, which may be a solvent free, aliphatic polyisocyanate, with a density between 0.85 - 1.35 (g/ml), and a percent isocyanate content between 10 - 30%.

A3. A polyol comprising, a solvent free (99% or greater solids) liquid polyol selected from the group comprising: polyether, polyester, or polycarbonate diol, the polyol with a density of about 0.90 - 1.30 (g/ml) and an OH value of 37 - 224 (KOH mg/PCDg) and between 4 and 20% mass of the total isocyanate side.

A4. A pigment, in some embodiments titanium dioxide having a density between about 4.0 - 6.0 (g/ml) at a minimum of 2% by mass to 10% of the total isocyanate side.

A5. A thickening agent between 0.0% - 10% by mass.

A6. A deaeration or defoaming agent with density about 0.80 - 1.10 (g/ml) in a range of 0.0% to 5% by mass.

The polyol side may comprise the following.

B1. A polyol, the polyol comprising a solvent free (99% or greater solids) liquid polyol selected from the group comprising: polyether, polyester, or polycarbonate diol, the polyol with a density of about 0.90 - 1.30 (g/ml), OH value of 37 - 224 (KOH mg/PCDg), and between 30 - 50% by mass.

B2. An isocyanate, the isocyanate comprising a prepolymer terminated with an aliphatic isocyanate, including, but not limited to hexamethylene diisocyanate (HDI), with density between 0.85 - 1.35 (g/ml), liquid at room temp, and a percent isocyanate content between 2 - 14%, or between 1 - 8% by mass.

B3. A first catalyst, the first catalyst selected from the group comprising Bi, Sn, Zn, Pb, Hg, the first catalyst with an active metal content of 6 - 20% by mass and a color of 5 maximum on the Gardner scale, the first catalyst between 0.1 - 2% by mass.

B4. A second catalyst, the second catalyst selected from the group comprising a Bi, Sn, Zn, Pb, Hg, the second catalyst with an active metal content of 9 - 22% and a color of 5 maximum on the Gardner scale, the second catalyst between 0.1 - 2% by mass (at least one of B3 or B4).

B5. A ZnO powder with a hydrophobic coating, a density between about 5.0 - 6.0 (g/ml), a particle size between about 5 - 50 nanometers, and which absorbs electromagnetic radiation with a wavelength from about 200 - 400 nanometers and has a critical wavelength about 360 - 390 nanometers, at no less than 0.5% but up to 8% by mass.

B6. A thermal stabilizing liquid antioxidant, which may be a phenolic antioxidant, with a maximum color of 14 on the Gardner scale, at no less than 0.20% but up to 3% by mass.

A UV stabilizer component, comprising at least one of B7 and/or B8.

B7. A first UV stabilizer, comprising a liquid hindered amine light stabilizer, with a maximum color of 14 on the Gardner scale, at no less than 0.20% by mass but up to 3% by mass.

B8. A second UV stabilizer, comprising a UV absorber including a triazole including a benzotriazole, said second UV stabilizer miscible with said first UV stabilizer, with a maximum color of 14 on the Gardner scale, at no less than 0.10% by mass but up to 3% by mass (at least one of B7 or B8), wherein B5 thru B8 totals more than 5% by mass.

B9. A thickening agent between 0.0 - 10% by mass.

B10. A deaeration or defoaming agent with density 0.80 - 1.10 (g/ml) at a maximum of 5% by mass.

On the isocyanate side the powder ingredients (silica and pigments) are placed in a suitable vessel and the remaining ingredients added at room temperature (may premix A1 and A3). A centrifugal mixer (FlackTek SpeedMixer, DAC 1200-500 VAC, from FlackTek, Landrum, SC) may be used. Mix until a thick, homogeneous thixotropic product is achieved. The product is preferably loaded into the applicator without delay.

On the polyol side, the polyol and isocyanate may be pre reacted to increase viscosity. The powder ingredients (including silica, ZnO, and pigments) may be placed in an appropriate vessel with the remaining ingredients added. The vessel may be placed in the centrifugal mixer. The product is loaded into the applicator.

On both sides mixing may be achieved in an evacuated reactor or a centrifugal mixer, or any other suitable manner. If an evacuated reactor is used vacuum degassing may be applied. In centrifugal mixing the cartridges may be filled directly from the mixing container.

In the embodiments represented by the example above, a Calculated Index of about 1.054 is achieved.

The rheology (flow and deformation) of the sealant was studied with a rheometer, a model MCR from Anton Paar GmbH. Curing measurements and glass transition measurements were taken using a cone and plate geometry and temperature devices. A curing measurement was done with constant measuring parameters (strain, frequency, force normal, temperature) to monitor change of viscoelastic properties over time. The initial cure time can be defined as a crossover point on a graph between storage modulus ( E', a measure of stiffness or how solid the sample is) and loss modulus (E'', a measure of the damping or how liquid the sample is)-that is, when the two on the modulus axis are equal. The two parts mix together and chemically react. The testing started immediately upon mixing with the sample placed between two 25mm parallel plates. The highest cure rate occurred initially, and the cross-over point, or initial cure time at between 5 minutes and 2 hours. During the working life, the mix is easily deformable, so as to be shaped and/or pressed into a gap on an aircraft assembly, prior to initial cure.

Color is a property by which certain ingredients are selected and also a property of the appearance of some embodiments of the resulting sealant as well as their appearance after exposure to weathering, including UV exposure. In some embodiments all ingredients are clear or white. In some embodiments all ingredients are clear or white except additional non-white pigments.

The Gardner scale as specified by ASTM D1544, is a standard designed to measure the color of resins, providing a gradation from 1 (light yellow) to 18 (dark brown). The Gardner color scale is used to determine the first and second catalyst chosen (maximum of 5), the liquid antioxidant, and the first and second UV stabilizers (the last three a maximum of 14).

Accelerated weather testing of the cured sealant was done pursuant to SAE J2527 (2017) using a controlled irradiance Xenon-arc apparatus. The weather chamber cycled air temperature, relative humidity and panel temperature. The test parameters include:
Inner lamp filter: quartz
Outer lamp filter: Borosilicate
Lamp irradiance level: 0,55 watts X meter-2 X nm-1
Chamber air temperature - light cycle: 47 °C
Chamber air temperature - dark cycle: 38 °C
Chamber relative humidity - light cycle: 50 %
Chamber relative humidity - dark cycle: 95 %
Black panel temperature - light cycle: 70 °C
Black panel temperature - dark cycle: 38 °C

The timing of light/dark cycle with sample surface spray, multiple per SAE J2527, CIELab, also referred to as L*a*b*, is a color space that expresses color as three values: L* for perceptual lightness and a* and b* for the four colors of human vision: red, green, blue and yellow. CIELab was intended as a perceptually uniform space, where a given numerical change corresponds to a similar perceived change in color. While the Lab space is not truly perceptually uniform, it nevertheless is useful in industry for detecting small differences in color. CIELab color space is a device-independent, "standard observer" model. The colors it defines are not relative to any particular device such as a computer monitor or a printer, but instead relates to the CIE standard observer which is an averaging of the results of color matching experiments under laboratory conditions ( Benchtop Spectrophotometers: Datacolor 1000 and SpectraVision). The letters L*, a* and b* represent each of the three values the CIELAB color space uses to measure objective color and calculate color differences. L* represents lightness from black to white on a scale of zero to 100, while a* and b* represent chromaticity with no specific numeric limits. Negative a* corresponds with green, positive a* corresponds with red, negative b* corresponds with blue and positive b* corresponds with yellow.

The CIELab value is calculated with reference to white as Standard Luminent D65. L is 0=black and 100 white, a* and b* axes fixed at -128 to +127, integers are used.

Delta E (dE) is a common measure of change in visual perception of two given colors and is often used to characterize the distance between two colors in a uniform color space such as CIELab. The just noticeable difference (JND) of Delta E, to the trained eye, is approximately 1. In other words, if two colors have a Delta E less than 1, the difference between them is imperceivable and if larger than 1, the difference is perceivable.

The CIELab test method set forth in ASTM D2244-23 observed the following initial and final color space results (500/1000 hours of exposure SAE J2725).

| | L* | a* | b* | L* | a* | b* | ΔE Initial Final |
|---|---|---|---|---|---|---|---|
| 500 Hours Initial: | 97.51 | -1.12 | 3.45 Final: | 96.68 | -0.70 | 4.07 | Delta E 1.12 |
| 1000 Hours Initial: | 97.47 | -1.16 | 3.72 Final: | 95.60 | -0.68 | 5.25 | Delta E 2.46 |

Cured Sealant

Panel 3"x 6" Aluminum alloy

Xenon Exposure IAW SAE J2527 (2017)

The samples tested were prepared from the two sides (polyol and isocyanate) substantially as set forth above and injected at room temperature onto the clean aluminum alloy and allowed to cure for 24 hours.

White as used herein is any color before exposure occupying a color space defined by an L* value greater than 93, an a* value between -5 and +5 and a b* value between -5 and +5. As can be seen from the two samples tested above are within these values before exposure.

Delta E as measured in accordance with ASTM D2244-23 is an indicator of color retention. A small (or no) color change is desirable, especially as to yellowing of a white product. **In** some embodiments, a sample originally white is acceptable if Delta E after 500 hours is equal to or less than 2.00 or after 1000 equal to or less less than 3.00, in another range, a delta E of 5 or less (500 or 1000 hours) is acceptable. A delta E of 1 is barely perceptible to the normal eye.

Applicants white, UV resistant sealant may be used as a sealant including land, sea and airborne vehicles, especially where UV exposure and exposure to the weather (including temperature change) are a factor. On aircraft the sealant may be placed on metallic or non-metallic surfaces. In some uses it may be applied to aluminum or aluminum alloy bare or painted surfaces, interior or exterior.

Some areas of use on aircraft include hump seals, adjacent aircraft windshields and any panel gaps (typically up to about 1/8 width), or any area needing an aerodynamic smoother (a radiused or shaped tool may be used). It may also be used with antenna gaskets, for example as a perimeter seal, adjacent wing to fuselage fairing or as a smoother where panels are misaligned. It may be used as a fillet seal at fillet joints (see Fig. 3A), for example on access panels such as fairing access panels, or on antenna gaskets. It may be used to seal butt joints. The UV resistant mix may be used, cured, in a product such as a gasket, for example a gasket with a metallic or non-metallic skeleton.

Moreover, in some embodiments with a white color, it may be used to match or closely match a similarly painted surface (including an adjacent surface, see Fig. 3), or on the other hand, may provide contrast adjacent to a dark painted surface to show, for example, fluid leaks, dirt or damage. Some uses include matching or closely matching any of the NIST Federal standard colors used often to paint military aircraft. That is to say, the white sealant disclosed may be color matched (or closely matched, in some embodiments delta E of 8 or less) with a painted surface on an aircraft.

The polyurethane sealant disclosed is paintable, with oil, water or latex based paint. The surface may be prepared by light sanding to promote adhesion of paint to the sealant surface.

Optionally, even with the color tint ingredients omitted and the cured polymer shows some resistance to degradation when exposed to UV light and thermal cycling per SAE J2725 .

Although the invention has been described with reference to specific embodiments, this description is not meant to be construed in a limiting sense. Various modifications of the disclosed embodiments, as well as alternative embodiments of the invention, will become apparent to persons skilled in the art upon reference to the description of the invention. It is therefore contemplated that such modifications can be made without departing from the spirit or scope of the present invention as defined in the claims appended. Unless specified to the contrary, features described in connection with one embodiment may be applied to other embodiments.

## Claims

1. A two-part, thermoset or thermoplastic, elastomeric sealant comprising the cured product of:
an isocyanate side of viscosity 12,500 - 500,000 cP at 25degC and a polyol side of viscosity 12,500 - 500,000 cP at 25degC, combined at a volume ratio between 1:1 and 1:10;
wherein the isocyanate side comprises:
A1. A first isocyanate prepolymer terminated with an aliphatic isocyanate, namely hexamethylene diisocyanate (HDI), with density between about 0.85 - 1.35 (g/ml), liquid at room temp, and a percent isocyanate content between about 2 - 14%;
A2. A multifunctional crosslinker, namely a solvent free, aliphatic polyisocyanate, with a density between 0.85 - 1.35 (g/ml), and a percent isocyanate content between 10 - 30%;
A3. A first polyol, the first polyol comprising, a solvent free (99% or greater solids) liquid polyol selected from the group comprising: polyether, polyester, or polycarbonate diol, the first polyol with a density of about 0.90 - 1.30 (g/ml) and an OH value of 37 - 224 (KOH mg/PCDg) and between 4 and 20 % mass of the total isocyanate side;
A4. A pigment, namely titanium dioxide having a density between about 4.0 - 6.0 (g/ml) at a minimum of 2% by mass to 10% of the total isocyanate side;
A5. A first thickening agent between 0.0% - 10% by mass;
A6. A first deaeration or defoaming agent with density about 0.80 - 1.10 (g/ml) in a range of 0.0% to 5% by mass;
wherein the polyol side comprises:
B1. A second polyol, the second polyol comprising a solvent free (99% or greater solids) liquid polyol selected from the group comprising: polyether, polyester, or polycarbonate diol, the second polyol with a density of about 0.90 - 1.30 (g/ml), OH value of 37 - 224 (KOH mg/PCDg), and between 30 - 50% by mass;
B2. A second isocyanate, the second isocyanate comprising a prepolymer terminated with an aliphatic isocyanate, namely, a hexamethylene diisocyanate (HDI), with density between 0.85 - 1.35 (g/ml), liquid at room temp, and a percent isocyanate content between 2 - 14%, between 1 - 8% by mass; at least one of B3 and/or B4 below,
B3. A first catalyst, the first catalyst selected from the group comprising Bi, Sn, Zn, Pb, Hg the first catalyst, with an active metal content of 6 - 20% by mass and a color of 5 maximum on the Gardner scale, the first catalyst between 0.1 - 2% by mass;
B4. A second catalyst, the second catalyst selected from the group comprising a Bi, Sn, Zn, Pb, Hg the second catalyst, with an active metal content of 9 - 22% and a color of 5 maximum on the Gardner scale, the second catalyst between 0.1 - 2% by mass;
B5. A ZnO powder with a hydrophobic coating, a density between about 5.0 - 6.0 (g/ml), a particle size between about 5 - 50 nanometers, and which absorbs electromagnetic radiation with a wavelength from about 200 - 400 nanometers, and has a critical wavelength about 360 - 390 nanometers, at no less than 0.5% but up to 8% by mass;
B6. A thermal stabilizing liquid antioxidant, namely a phenolic antioxidant, and a maximum color of 14 on the Gardner scale, at no less than 0.20% but up to 3% by mass;
a UV stabilizer component, comprising at least one of B7 and/or B8;
B7. A first UV stabilizer, comprising a liquid hindered amine light stabilizer, with a maximum color of 14 on the Gardner scale, at no less than 0.20% by mass but up to 3% by mass;
B8. A second UV stabilizer, comprising a UV absorber including a triazole including a benzotriazole, said second UV stabilizer miscible with said first UV stabilizer, with a maximum color of 14 on the Gardner scale, at no less than 0.10% by mass but up to 3% by mass;
wherein B5 thru B8 totals more than 5% by mass;
B9. A second thickening agent between 0.0 - 10% by mass; and
B10. A second deaeration or defoaming agent with density 0.80 - 1.10 (g/ml) at a maximum of 5% by mass.

2. A sealant for use on an aircraft or other vehicle, the sealant comprising:
a polyol and an isocyanate, when cured, yielding a UV resistant (SAE J2725), elastomeric polyurethane.

3. The sealant of claim 2 wherein the polyurethane is tinted.

4. The sealant of claim 3 wherein the polyurethane is white.

5. The sealant of any preceding claim wherein the polyurethane:
has a final hardness between 30 Shore A and 95 Shore A (ASTM D2240); and/or
is hydrolytically stable (ASTM D3137, 100C for 1 week, no more than a 25% change in physical properties); and/or
has a glass transition temperature between -55 degrees and 5 degrees C; and/or is paintable (ASTM D3359); and/or
comprises a resin and hardener that will react at such a rate to have the storage modulus, E', equivalent to the loss modulus, E", in a minimum of 5 minutes and a maximum of 2 hrs when tested on a rheometer (ASTM D6204); and/or
has a peel strength of 10 and 60 pounds inch width (piw), 90 degrees peel back on clean Al 2024, or a cohesive failure of the adhesive during testing, (ASTM D6862); and/or
has a minimum tensile strength of 800 psi as measured by ASTM D412; and/or
has a minimum elongation of 200% as measured by ASTM D412; and/or
is non-linearly, inversely responsive to shear applied; and/or
is non-linearly, inversely responsive to shear applied.

6. The sealant of claim 4 wherein the sealant member is a linear member proximate two different parts on an aircraft exterior.

7. The sealant of claim 4 wherein the sealant has a maximum slump of 7.0 as measured by ASTM D2202 and/or a maximum shrink of 1% as measured by ASTM C1241.

8. A method of making a linear sealing member for use on parts of an aircraft, the linear sealing member at least partially exposed to sunlight, the method comprising the steps of:
providing an injector having a forcing element, a first compartment with a polyol side and a second compartment with an isocyanate side, the polyol and isocyanate prepared to yield a cured, UV resistant (SAE J2725) polyurethane, the mixing compartments in fluid communication with a tip;
placing the tip of the injector proximate an aircraft part;
applying sufficient pressure to the forcing element such that mixed polyol and isocyanate flows from the tip and contacts aircraft part; and
allowing the mix to cure.

9. The method of Claim 8 wherein the aircraft part is a polycarbonate or acrylic windscreen or an exterior aluminum alloy part.

10. The method of claim 8 wherein the aircraft part is an exterior aluminum alloy part and is painted.

11. The method of any of Claims 8 to 10, wherein the cured polyurethane is white or tinted.

12. An injector assembly comprising:
a forcing element, a first compartment, having a first fluid composition and a second compartment having a second fluid composition, and a mixing straw with a tip, the mixing straw in fluid communication with the two compartments, the forcing element adapted to receive and apply pressure to the two compartments such that the fluids mix in the mixing straw and are expelled from the tip,
wherein the mix cures to a UV resistant, thermoset polyurethane elastomer.

13. An injector assembly of Claim 12, wherein said mix cures to white or tinted in colour.

14. An aircraft sealant comprising: a cured, UV resistant (SAE J2725) polymer.

15. The aircraft sealant of claim 13 wherein the sealant:
has a minimum elongation of 200% as measured by ASTM D412; and/or has a final hardness of between 30 and 95 Shore A (ASTM D2240); and/or
has a peel strength of 10 and 60 pounds inch width (piw), 90 degrees peel back on clean Al 2024, or a cohesive failure of the adhesive during testing (ASTM D6862); and/or
after 500 hours of exposure, SAE J2527 (2017), the CIELab color space has a Delta E of 3 or less
after 1000 hours of exposure, SAE J2527 (2017), the CIELab color space has a Delta E of 5 or less; and/or
after 500 hours of exposure, SAE J2527 (2017), the CIELab color space has undergone an a* change of 3 or less; and/or
after 1000 hours of exposure, SAE J2527 (2017), the CIELab color space has undergone an a* change of 4 or less; and/or
the cured polymer of said sealant is white or tinted.
